# FASCICULE DE BREVET EUROPEEN

(11) **EP 3 558 550 B1**
(45) Date de publication et mention de la délivrance du brevet: **06.01.2021**
(21) Numéro de dépôt: 17800913.0
(22) Date de dépôt: 03.11.2017
(51) Int. Cl.: B07C 3/02

(54) **EQUIPEMENT DE TRAITEMENT DE COLIS AVEC DES ROBOTS NAVETTES QUI DEPLACENT DES SACS OU ANALOGUES**
VORRICHTUNG ZUM BEARBEITEN VON PAKETEN MITTELS VERFAHRBAREN ROBOTERN ZUM BEWEGEN VON SÄCKEN O.Ä.
DEVICE FOR HANDLING PARCELS USING SHUTTLE ROBOTS FOR MOVING BAGS OR THE LIKE

(30) Priorité: 23.12.2016 FR 1663304
(43) Date de publication de la demande: 30.10.2019
(73) Titulaire: Solystic, 92220 Bagneux (FR)
(72) Inventeur: MIETTE, Emmanuel, 95210 Saint Gratien (FR); CHIROL, Luc, 75016 Paris (FR)
(74) Mandataire: Cabinet Prugneau-Schaub
(86) Numéro de dépôt international: PCT/FR2017/053016
(87) Numéro de publication internationale: WO 2018/115608

(56) Documents cités:
- WO-A1-2014/057182
- FR-A1- 3 027 140

## Description

### Domaine technique

Le domaine de l'invention est celui des centres logistiques de traitement de colis dans lesquels après avoir été réceptionnés et triés dans des bacs, les colis sont acheminés jusqu'à des plateformes de regroupement ou de transport.

### Technique antérieure

Certains centres logistiques de traitement des colis comprennent un convoyeur de tri automatisé qui peut être commandé par une unité de contrôle/commande pour déplacer en série des colis le long de sorties de tri.

L'unité de contrôle/commande dirige ensuite chaque colis vers une certaine sortie de tri choisie en fonction d'une information de tri associée au colis qui a été détectée en amont dans le convoyeur.

Des bacs de tri de type amovibles sont disposés sous les sorties de tri pour réceptionner les colis déversés en vrac.

Des Opérateurs en charge du traitement des colis viennent ensuite récupérer manuellement les bacs chargés en colis pour les transférer dans des sacs.

Chaque sac est ensuite déplacé par un Opérateur jusqu'à un point de dépose, par exemple une plateforme de regroupement des sacs ou conditionnement pour le transport en camion, ce qui représente une manutention pénible lorsque les sacs sont lourds et encombrants.

Il existe des moyens robotisés pour le déplacement de bacs comme décrits dans le document WO-2014/057182 mais qui ne sont pas adaptés pour un traitement optimiser des colis.

### Exposé de l'invention

Le but de l'invention est donc de remédier à ces différents inconvénients.

En particulier, l'invention concerne un équipement de traitement de colis entre des points de chargement et des points de dépose desdits colis dans un centre logistique, ledit équipement comprenant des chariots chacun conçu pour porter un réceptacle amovible et au moins un robot navette conçu pour accoster un desdits chariots et le déplacer automatiquement, ledit équipement comprenant en outre une unité de contrôle/commande conçue pour commander automatiquement à distance selon un plan de tri le déplacement dudit robot navette, caractérisé en ce que ledit équipement comprend des réceptacles de tri placés auxdits points de chargement dans lesquels sont déversés en vrac lesdits colis en fonction d'une indication de tri associée auxdits points de chargement, et en ce que l'unité de contrôle commande est conçue pour commander le déplacement dudit robot navette de telle manière à placer des chariots avec des réceptacles vides auxdits points de chargement dans lesquels les colis sont déversés en vrac et à placer lesdits chariots avec un réceptacle chargé en colis à un point de dépose où le réceptacle chargé en colis est remplacé par un réceptacle vide.

L'idée à la base de l'invention est donc d'automatiser le traitement des colis directement depuis un point de chargement jusqu'à un point de dépose.

Avec l'équipement selon l'invention, les tâches pénibles de l'Opérateur de transfert de colis d'un réceptacle à un sac et de déplacement des sacs jusqu'aux points de dépose sont supprimées.

Cette automatisation réduit également les risques d'erreur d'acheminement de colis vers un mauvais point de dépose.

L'équipement selon l'invention peut avantageusement présenter des réceptacles sous la forme de sacs. Les chariots selon l'invention présentent alors un plateau horizontal sur roulettes et un porte-sac surplombant le plateau du chariot pour suspendre le sac ouvert sur le dessus.

L'invention s'étend également à un centre logistique comprenant un équipement selon l'invention pour acheminer des colis entre des points de chargement et des points de dépose dans lequel lesdits points de chargement sont des sorties de tri d'un convoyeur de tri et dans lequel lesdits points de dépose sont des plateformes de regroupement de colis ou des plateformes de conditionnement pour le transport.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une représentation très schématique d'un centre logistique utilisant un équipement pour acheminer des colis selon l'invention ;
- la figure 2 est une vue en perspective d'un chariot selon l'invention ;
- La figure 3 est une représentation schématique de profil d'un robot navette accosté à un chariot portant un sac selon l'invention.

### Description des modes de réalisation

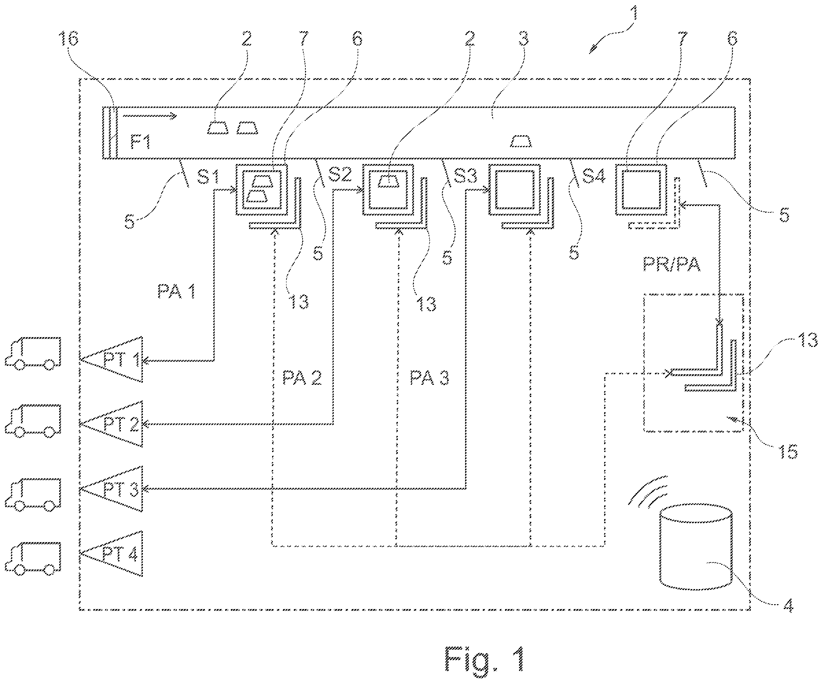

Sur la figure 1, on a illustré très schématiquement la topologie d'un centre logistique 1 pour le tri de colis 2, par exemple un centre de tri postal, avec un convoyeur de tri 3 et des sorties de tri S1, S2, S3, S4 ainsi qu'un équipement selon l'invention pour acheminer les colis.

Seulement un petit nombre de sortie de tri S1, S2, S3, S4 sont ici représentées sur les dizaines voire les centaines de sorties de tri que peut desservir le convoyeur 3.

Le convoyeur de tri 3 est piloté par une unité de contrôle/commande 4 adaptée pour reconnaître automatiquement une indication de tri d'un colis 2, comme par exemple une adresse de destination postale dans le cadre d'un centre logistique de tri postal. L'unité 4 commande ensuite le convoyeur 3 pour déplacer le colis 2 dans le sens de convoyage indiqué par la flèche F1 vers la sortie de tri S1, S2, S3, S4 associée à l'indication de tri sur la base d'un plan de tri enregistré en mémoire de l'unité 4.

La reconnaissance automatique d'adresse peut se faire par exemple à partir d'une image numérique de l'adresse de destination apposée sur le colis 2 qui a été saisie lors de l'introduction du colis dans le convoyeur de tri 3.

Le convoyeur de tri 3 est ici surélevé par rapport au sol dans le centre logistique 1 et chaque sortie de tri S1, S2, S3, S4 est munie d'une chute de tri sous la forme d'une rampe inclinée 5.

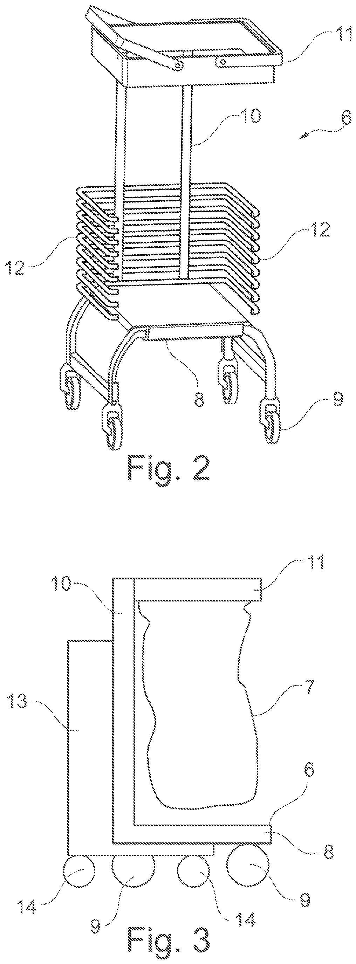

L'équipement pour acheminer les colis 2 selon l'invention comprend des chariots 6, du type par exemple représenté sur la figure 2, adaptés pour venir se positionner sous les sorties de tri S1, S2, S3, S4, etc., au niveau des rampes 5 inclinée afin de réceptionner en vrac les colis 2 directement dans des réceptacles 7. Chaque sortie de tri est donc ici considérée comme un point de chargement en colis 2 auquel peut venir se positionner un chariot 6.

Par réceptacle 7 on entend tout type de conteneur capable de stocker des colis 2 hétérogènes et pouvant être monté sur chariot 6, ici par exemple un sac 7 représenté sur la figure 3.

Comme visible sur les figures 2 et 3, le chariot 6 selon l'invention comprend un plateau 8 monté sur roulettes 9 à partir duquel s'étend une paroi verticale 10. Un porte-sac annulaire 11 saille également sensiblement perpendiculairement depuis la paroi 10 pour suspendre un sac 7 au-dessus du plateau 8, le sac étant ouvert sur le dessus, à la manière d'un support mural pour sac poubelle. Des parois de côté 12, visibles uniquement sur la figure 2, sont adjacentes à la paroi 10 verticale et permettent de maintenir le sac 7 chargé en colis dans l'espace défini au sol par le plateau 8.

L'équipement comprend en outre des robots navettes autonomes 13, ici par exemple montés sur roulettes motorisées 14, qui sont aptes à se déplacer sur les chemins de circulation PA1, PA2, PA3, visibles sur la figure 1, empruntés habituellement par les Opérateurs dans le centre logistique.

Chaque robot navette 13 est donc commandé à distance par l'unité de contrôle/commande 4 selon un plan d'acheminement pour circuler sur les chemins de circulation PA1, PA2, PA3 respectivement d'une sortie de tri S1, S2, S3 vers un point de dépose PT1, PT2, PT3 et selon un plan de retour du point de dépose vers le point de chargement.

Les chemins de circulation sont ici les chemins normalement empruntés par les Opérateurs de tri.

Chaque robot navette 13 est aussi conçu pour s'accoster à un chariot 6, comme visible sur la figure 3, de façon à l'entraîner en déplacement selon les plans d'acheminement et de retour décrits ci-avant et également pour se désolidariser de celui-ci de façon à le laisser sur place.

Chaque robot navette 13 est également commandé à distance par l'unité de contrôle/commande 4 pour être déplacé sur des chemins de circulation PR/PA définis entre une position de rangement PR dans laquelle le robot navette est à l'arrêt dans un parking 15 du centre logistique 1 jusqu'à une position d'accostage PA dans laquelle il est accosté à un chariot 6. Comme représenté sur la figure 1, un robot navette 13 est ici commandé par l'unité 4 pour se déplacer de la position de rangement PR au parking 15 jusqu'à une position d'accostage PA représentée en pointillée dans le point de chargement S4.

Le parking 15 sert également pour le stockage des chariots 6 vides. L'unité 4 est d'ailleurs conçue pour commander les robots navettes pour déplacer des chariots vides du parking 15 jusqu'à des points de chargement nécessitant la présence d'un chariot pour réceptionner des colis en vrac.

L'équipement selon l'invention comprend en outre un détecteur 16 de chargement des colis dans les sacs 7. Ce détecteur est ici disposé sur le convoyeur de tri 3 mais pourrait tout aussi bien être disposé sur le chariot ou même être installé au niveau des sorties de tri S1, S2, S3, S4. Les informations du détecteur 16 sont récupérées par l'unité de contrôle/commande 4 qui commande automatiquement à distance le déplacement du robot navette 13 d'une sorties de tri S1, S2, S3, S4 à un point de dépose PT1, PT2, PT3, PT4 lorsqu'un seuil de chargement maximal en colis est atteint dans le réceptacle 7. Le détecteur 16 est par exemple utilisé pour donner des informations sur le poids, la taille, la forme ou tout autre type d'information physiques sur les colis 2.

Les points de dépose (PT1, PT2, PT3, PT4) sont par exemple des plateformes de regroupement de colis ou des plateformes de conditionnement pour le transport en camion.

Les sacs chargés de colis sont ainsi détachés du porte-sac 11 pour être regroupés et/ou conditionnés (fermeture du sac, étiquetage, etc.).

Un Opérateur accrochera alors un sac 7 vide au porte-sac 11 et le robot navette 13 déplacera le chariot soit vers un point de chargement sans chariot ou bien au parking 15 si aucun colis n'est prévu au point de chargement approprié.

## Revendications

1. Equipement de traitement de colis (2) entre des points de chargement (S1, S2, S3, S4) et des points de dépose (PT1, PT2, PT3, PT4) desdits colis dans un centre logistique (1), ledit équipement comprenant des chariots (6) chacun conçu pour porter un réceptacle (7) amovible et au moins un robot navette (13) conçu pour accoster un desdits chariots et le déplacer automatiquement, ledit équipement comprenant en outre une unité de contrôle/commande (4) conçue pour commander automatiquement à distance selon un plan de tri le déplacement dudit robot navette, **caractérisé en ce que** ledit équipement comprend des réceptacles de tri (7) placés auxdits points de chargement dans lesquels sont déversés en vrac lesdits colis en fonction d'une indication de tri associée auxdits points de chargement, et **en ce que** l'unité de contrôle commande est conçue pour commander le déplacement dudit robot navette de telle manière à placer des chariots avec des réceptacles vides auxdits points de chargement (S1, S2, S3, S4) dans lesquels les colis sont déversés en vrac et à placer lesdits chariots avec un réceptacle chargé en colis à un point de dépose (PT1, PT2, PT3, PT4) où le réceptacle chargé en colis est remplacé par un réceptacle vide.

2. Equipement selon la revendication 1, **caractérisé en ce que** les réceptacles (7) sont des sacs et **en ce que** chaque chariot (6) comprend un plateau (8) horizontal sur roulettes (9) et un porte-sac (11) surplombant le plateau du chariot conçu pour suspendre un sac.

3. Centre logistique comprenant un équipement selon l'une des revendications 1 ou 2 pour acheminer des colis (2) entre des points de chargement (S1, S2, S3, S4) et des points de dépose (PT1, PT2, PT3, PT4), **caractérisé en ce que** lesdits points de chargement sont des sorties de tri d'un convoyeur de tri (3).

4. Centre logistique selon la revendication 3, **caractérisé en ce que** lesdits points de dépose sont des plateformes de regroupement de colis ou des plateformes de conditionnement pour le transport.

## Patentansprüche

1. Einrichtung zur Verarbeitung von Packstücken (2) zwischen Beladepunkten (S1, S2, S3, S4) und Entladepunkten (PT1, PT2, PT3, PT4) der Packstücke in einem Logistikzentrum (1), wobei die Einrichtung jeweils zum Tragen eines abnehmbaren Behältnisses (7) ausgebildete Laufwagen (6) und wenigstens einen zum Ankoppeln an einem der Laufwagen und zu dessen automatischer Verlagerung ausgebildeten Zuführroboter (13) umfasst, wobei die Einrichtung ferner eine Regel-/Steuereinheit (4) umfasst, die ausgebildet ist zum automatischen Fernsteuern der Verlagerung des Zuführroboters gemäß einem Sortierplan,
**dadurch gekennzeichnet,**
**dass** die Einrichtung Sortierbehältnisse (7) umfasst, die an den Beladepunkten platziert sind, in welche die Packstücke in Abhängigkeit von einer den Beladepunkten zugeordneten Sortierangabe durcheinander entleert werden, und
**dass** die Regel-/Steuereinheit ausgebildet ist zum Steuern der Verlagerung des Zuführroboters derart, dass Laufwagen mit leeren Behältnissen an den Beladepunkten (S1, S2, S3, S4) platziert werden, in welche die Packstücke durcheinander entleert werden, und die Laufwagen mit einem mit Packstücken beladenen Behältnis an einem Entladepunkt (PT1, PT2, PT3, PT4) platziert werden, an dem das mit Packstücken beladene Behältnis durch ein leeres Behältnis ersetzt wird.

2. Einrichtung nach Anspruch 1, **dadurch gekennzeichnet, dass** die Behältnisse (7) Säcke sind, und dass jeder Laufwagen (6) eine horizontale Platte (8) auf Rollen (9) und einen die Platte des Laufwagens überlagernden und zum Aufhängen eines Sacks ausgebildeten Sackträger (11) umfasst.

3. Logistikzentrum, umfassend eine Einrichtung nach einem der Ansprüche 1 oder 2 zum Befördern von Packstücken (2) zwischen Beladepunkten (S1, S2, S3, S4) und Entladepunkten (PT1, PT2, PT3, PT4), **dadurch gekennzeichnet, dass** die Beladepunkte Sortierausgänge eines Sortierförderers (3) sind.

4. Logistikzentrum nach Anspruch 3, **dadurch gekennzeichnet, dass** die Entladepunkte Plattformen zum Neugruppieren von Packstücken oder Plattformen zum Aufbereiten für den Transport sind.

## Claims

1. Equipment for handling parcels (2) between loading points (S1, S2, S3, S4) at which said parcels are loaded and drop-off points (PT1, PT2, PT3, PT4) at which said parcels are dropped off in a logistics center (1), said equipment comprising trolleys (6), each of which is designed to carry a removable receptacle (7), and at least one shuttle robot (13) designed to dock with any one of said trolleys and to move it automatically, said equipment further comprising a monitoring and control unit (4) designed for automatically and remotely controlling the movement of said shuttle robot as a function of a sorting plan, said equipment being **characterized in that** it further comprises sorting receptacles (7) placed at said loading points and into which said parcels are poured loosely in bulk as a function of sorting indications associated with said loading points, and **in that** the monitoring and control unit is designed to control the movement of said shuttle robot in such a manner as to place at said loading points (S1, S2, S3, S4) trolleys with empty receptacles into which the parcels are poured loosely in bulk, and in such a manner as to place each of said trolleys with a receptacle loaded with parcels at a drop-off point (PT1, PT2, PT3, PT4) where the receptacle loaded with parcels is replaced with an empty receptacle.

2. Equipment according to claim 1, **characterized in that** the receptacles (7) are bags, and **in that** each trolley (6) comprises a horizontal deck (8) on casters (9) and a bag holder (11) overlying the deck of the trolley and designed to suspend a bag.

3. A logistics center including equipment according to claim 1 or claim 2 for routing parcels (2) between loading points (S1, S2, S3, S4) and drop-off points (PT1, PT2, PT3, PT4), said logistics center being **characterized in that** said loading points are sorting outlets of a sorting conveyor (3).

4. A logistics center according to claim 3, **characterized in that** said drop-off points are parcel consolidation platforms or platforms for packaging parcels for transport.
